# EUROPÄISCHE PATENTSCHRIFT

(11) **EP 3 672 797 B1**
(45) Veröffentlichungstag und Bekanntmachung des Hinweises auf die Patenterteilung: **01.06.2022**
(21) Anmeldenummer: 18750462.6
(22) Anmeldetag: 14.08.2018
(51) Int. Cl.: B32B 7/12, B32B 27/08, B32B 27/34, B32B 27/40, B32B 3/26, B29C 65/48, B29C 65/50, B32B 37/12

(54) **HERSTELLUNG VON VERBUNDMATERIALIEN AUS FOLIE, FESTEM KLEBSTOFFPOLYMER, UND EINER POLYURETHANSCHICHT**
PREPARATION OF COMPOSITE MATERIALS FROM FILM, SOLID ADHESIVE POLYMER, AND A POLYURETHANE LAYER
PREPARATION DE MATERIAUX COMPOSITES A PARTIR D'UN FILM, D'UN POLYMERE ADHESIF SOLIDE ET D'UNE COUCHE DE POLYURETHANE

(30) Priorität: 24.08.2017 EP 17187656
(43) Veröffentlichungstag der Anmeldung: 01.07.2020
(73) Patentinhaber: BASF Coatings GmbH, 48165 Münster (DE)
(72) Erfinder: SIMPSON, Paul Andrew, 67056 Ludwigshafen (DE); PFEIFER, Detlef, 67056 Ludwigshafen (DE); STIWITZ, Yves, 67056 Ludwigshafen (DE)
(74) Vertreter: BASF IP Association
(86) Internationale Anmeldenummer: PCT/EP2018/071991
(87) Internationale Veröffentlichungsnummer: WO 2019/038129

(56) Entgegenhaltungen:
- EP-A1- 2 933 089
- WO-A1-2009/106500
- WO-A1-2016/178169

## Beschreibung

Die vorliegende Erfindung betrifft ein Verfahren zur Herstellung von mehrschichtigen Verbundmaterialien, sowie mehrschichtige Verbundmaterialien erhältlich nach diesem Verfahren.

Kunststofffolien werden in vielen Anwendungen benötigt, beispielsweise in Verpackungen. Ihre mechanischen Eigenschaften, ihr Aussehen und ihr Griff sind in einigen Anwendungen sehr gefragt. So sind beispielsweise hochtransparente Kunststofffolien als Verpackungsmaterial von Gegenständen wie Hemden, Zigaretten, Glückwunschkarten, Büchern oder Tischdecken sehr beliebt.

Besonders wichtig sind Folien aus Kunststoff bei der Herstellung von elektrischen Geräten, beispielsweise Mobiltelefone (Handys), insbesondere daher, weil man sie tiefziehen und äußerst einfach an die Form des betreffenden Geräts anpassen kann.

WO 2009/106500 beschreibt Verbundmaterialien aus Folien mit einer Polyurethanschicht und deren Herstellung.

WO 2016/178169 A1 beschreibt Verbundsysteme aus laminiertem thermoplastischem Material mit einer in der Tiefe ästhetisch wirkenden Verbindungsschicht aus thermoplastischem Polyurethan zur Verbindung mit einer zumindest teilweise transparenten oder transluzenten Polymerfolie zur Anwendung im Bereich von Gestellen für Brillen.

EP 2933089 A1 beschreibt Verfahren zum Kaschieren von Bauteilen mit Folien, in der ein viskos-flüssiger Schmelzklebstoff derart in einem Raster auf die Folie aufgetragen wird, dass sich ein Kanalsystem bildet, welches bei Anlegen von einem Unterdruck zu einem gleichmäßigen Abtransport von zwischen dem Bauteil und der Folie befindlicher Luft führt.

Es bestand die Aufgabe, Prozesse bereit zu stellen, die die Herstellung von mehrschichtigen Verbundsystemen ermöglichen. Die Verbundsysteme sollten eine bessere Haftung der Schichten aufweisen als bekannte Verbundsysteme.

Gegenstand der Erfindung ist ein Verfahren zur Herstellung von mehrschichtigen Verbundmaterialien enthaltend
(A) eine Folie basierend auf Polyurethan oder Polyamid,
(B) eine Verbindungsschicht aus thermoplastischen Klebstoffpolymer mit einem Schmelzbereich von 70 bis 130 °C, und
(C) eine Polyurethanschicht,
wobei man
a) mit Hilfe einer Matrize die Polyurethanschicht (C) bildet,
b) das Klebstoffpolymer in fester Form auf die Folie (A) und/oder auf Polyurethanschicht (C) aufbringt, und
c) die Polyurethanschicht (C) mit der Folie (A) verbindet.

Weiterer Gegenstand der Erfindung ist ein mehrschichtiges Verbundmaterial enthaltend
(A) eine Folie aus Polyurethan oder Polyamid,
(B) eine Verbindungsschicht aus thermoplastischen Klebstoffpolymer mit einem Schmelzbereich von 70 bis 130 °C, und
(C) eine Polyurethanschicht,
erhältlich durch das erfindungsgemäße Verfahren.

Erfindungsgemäße Verfahren verwenden als Folie (A) in der Regel ein flächiges Substrat. Flächige Substrate sind im Rahmen der vorliegenden Erfindung solche, deren Ausdehnung in zwei Dimensionen viel größer ist als in der dritten, beispielsweise können Breite und Länge von flächigem Substrat, insbesondere Folie (A), die Dicke jeweils um mindestens den Faktor 100 übertreffen, bevorzugt um mindestens den Faktor 1000. In einer Ausführungsform übertreffen Länge und/oder Breite von Folie (A) die Dicke um einen Faktor von bis zu 1.000.000. Länge und Breite von Folie (A) können jeweils gleich oder vorzugsweise verschieden sein. Beispielsweise kann die Länge von Folie (A) die Breite um den Faktor 1,1 bis zu 100 übertreffen.

In einer Ausführungsform der vorliegenden Erfindung liegt die Länge von Folie (A) im Bereich von 50 cm bis 100 m, bevorzugt bis zu 50 m, besonders bevorzugt bis zu 10 m. In einer Ausführungsform der vorliegenden Erfindung liegt die Breite von Folie (A) im Bereich von 10 cm bis 5 m, bevorzugt bis zu 2 m.

In einer Ausführungsform der vorliegenden Erfindung liegt die Dicke von Folie (A) im Bereich von 50 nm bis 2 mm, bevorzugt 1 µm bis 500 µm, und insbesondere von 20 µm bis 300 µm.

In einer Ausführungsform handelt es sich bei Folie (A) um ein "endlos-Material ", dass in der Regel aufgerollt eingesetzt wird und in einem kontinuierlichen Verfahren verwendet wird. Hierbei übertrifft die Länge der aufgerollten Folie (A) dessen Breite um ein Vielfaches.

Vorzugsweise ist Folie (A) manuell biegbar, das heißt ohne Zuhilfenahme eines Werkzeugs.

In einer Ausführungsform der vorliegenden Erfindung weist flächiges Substrat, insbesondere Folie (A), einen E-Modul im Bereich von 200 bis 5000 N/mm² auf, bestimmbar beispielsweise nach DIN 53455. Geeignet sind insbesondere flächige Substrate, insbesondere Folien, mit einem E-Modul im Bereich von 200 bis 1000 N/mm², die beispielsweise überwiegend Polyethylen (HDPE oder LDPE) enthalten, im Bereich von 1000 bis 3500 N/mm², die beispielsweise überwiegend Hart-PVC enthalten, oder im Bereich von 4000 bis 4500 N/mm², die überwiegend PET enthalten.

Die Folie kann Additive enthalten. Geeignete Additive können beispielsweise gewählt sein aus Weichmachern, Schlagzähmodifiern, Stabilisatoren, Farbmitteln, Füllstoffen, Verstärkungsstoffen, Flammschutzmittel, Lichtschutzmittel, und Wachsen.

Folien (A) können ein Flächengewicht im Bereich von 10 bis 3000 g/m² aufweisen, bevorzugt sind 50 bis 300 g/m².

Geeignete Folien (A) basieren auf Polyurethan oder Polyamid. Die Folie umfasst meist mindestens 50 Gew.%, bevorzugt mindestens 80 Gew.% und insbesondere mindestens 90 Gew% des Polymers (wie Polyurethan oder Polyamid). In einer bevorzugten Form basiert die Folie auf Polyurethan, insbesondere thermoplastischen Polyurethan. In einer bevorzugten Form basiert die Folie auf Polyamid. Bevorzugt ist die Folie aus thermoplastischem Polyurethan oder aliphatischem Polyamid.

Die Folie kann aus einem Verbund von Einzelfolien aufgebaut sein. Der Ausdruck, dass die Folie auf einem Polymer basiert bezieht sich bei Verbundfolien auf die Einzelfolie, welche die Oberfläche der Verbundfolie bildet.

Geeignete Polyamide für die Folie sind aliphatische, teilaromatische und aromatische Polyamide, wobei aliphatische Polyamide bevorzugt sind. Homo- und Copolyamide sind geeignet.

Geeignete teilaromatische Polyamide sind PA 6T aus Hexamethylendiamin und Terephthalsäure (PA 6T).

Geeignete aromatische Polyamide basieren auf para-Phenylendiamin und Terephthalsäure.

Geeignete aliphatische Polyamide basieren auf Monomeren wie Caprolactam, Hexamethylendiamin, Adipinsäure, und Sebacinsäure.

Beispiele für Polyamide sind PA 6/66 aus Caprolactam, Hexamethylendiamin und Adipinsäure, PA 66/610 aus Hexamethylendiamin, Adipinsäure und Sebacinsäure, PA 6.6 aus Hexamethylendiamin und Adipinsäure, und PA 6 aus Caprolactam.

Das Polyamid ist insbesondere PA 6/66 aus Caprolactam, Hexamethylendiamin und Adipinsäure.

Geeignete Polyurethane für die Folie sind solche, wie für die Polyurethanschicht (C) nachfolgend beschrieben, bevorzugt die nachfolgend beschriebenen thermoplastischen Polyurethane.

Bevorzugte Polyurethane für die Folien sind Polyester-Polyurethane oder Polyether-Polyurethane. Besonders bevorzugt sind Polyester-Polyurethane, insbesondere aromatische Polyester-Polyurethane.

Geeignete Polyurethane für die Folien sind üblicherweise frei von Weichmachern und/oder von Lösemitteln. Geeignete Polyurethane für die Folien haben meist eine Erweichungstemperatur von 80 bis 120 °C.

Das Verbundmaterial umfasst eine Verbindungsschicht (B) aus thermoplastischen Klebstoffpolymer mit einem Schmelzbereich von 70 bis 130 °C. Bei Verbindungsschicht (B) kann es sich beispielsweise um eine durchbrochene, das heißt nicht vollflächig, ausgeprägte Schicht handeln, vorzugsweise eines gehärteten organischen Klebstoffs.

In einer Ausführungsform weist Verbindungsschicht (B) eine Dicke im Bereich von einem bis maximal 100 µm, bevorzugt bis 50 µm, besonders bevorzugt bis 15 µm auf.

Das Klebstoffpolymer bringt man in fester Form auf die Folie (A) und/oder auf Polyurethanschicht (C) auf.

Das Klebstoffpolymer in Schritt b) hat meist ein Flächengewicht von 0,1 bis 1000 g/m², bevorzugt von 1 bis 300 g/m², und insbesondere von 5 bis 100 g/m².

Das Klebstoffpolymer in Schritt b) hat meist eine **Schmelze-Volumenfließrate MVR** von 1 bis 500 cm³/10 min, bevorzugt von 5 bis 200 cm³/10 min, und insbesondere von 10 bis 100 cm³/10 min. Die Schmelze-Volumenfließrate MVR kann gemessen werden bei 160 °C und 2,16 kg nach ISO 1133-1.

Das Klebstoffpolymer hat bevorzugt einen **Schmelzbereich** von 80 bis 125 °C, und insbesondere von 85 bis 120 °C. Der Schmelzbereich kann mittels DSC bestimmt werden, z.B. nach ISO 11357.

Das Klebstoffpolymer kann in Schritt b) in Form eines Klebegitters, Klebevlies oder Klebefolie aufgebracht werden.

Klebegitter können runde oder eckige (wie quadratisch, dreieckig, sechseckig) Öffnungen aufweisen.

Klebevliese können unregelmäßig zusammengefügten Faser enthalten.

Klebefolien können ein vollflächiges Blatt ausbilden, was üblicherweise keine Öffnungen hat.

Die Klebstoffpolymere sind in fester Form beispielsweise als Klebegitter, Klebevlies oder Klebefolie, kommerziell erhältlich, wie von AB-Tec GmbH & Co. KG, Iserlohn, Germany; Spunfab Ltd., Cuyahoga Falls, USA; oder Protechnic S.A., Cernay, Frankreich.

Das Klebstoffpolymer kann auf Polyurethanen, Polyamiden, Polyestern, oder Polyolefinen basieren.

Geeignete **Polyurethane** für die Klebstoffpolymere sind solche, wie für die Polyurethanschicht (C) nachfolgend beschrieben, bevorzugt die nachfolgend beschriebenen thermoplastischen Polyurethane, insbesondere aliphatische thermoplastischen Polyurethane.

Geeignete **Polyamide** sind Copolyamide.

Geeignete **Polyester** sind Polyethylenterephthalat (PET) und PET Copolymere.

Geeignete **Polyolefine** sind Polyethylene (wie low density polyethylene (LDPE), linear low density polyethylene (LLDPE), medium density polyethylene (MDPE), linear medium density polyethylene (LMDPE), linear very-low density polyethylene (VLDPE), linear ultra-low density polyethylene (ULDPE), high density polyethylene (HDPE)) und Copolymere von Polyethylen. Beispiele für Copolymere von Polyethylen sind EthylenVinylacetat, Ethylen-vinylalkohol, Ethylen-Octen, Ethylen-Acrylsäure, wie z.B. in WO2003064153 beschrieben.

In einer Ausführungsform kann Verbindungsschicht (B), wie auch Schicht (C), optional ein oder mehrere **Additive** enthalten, beispielsweise ein oder mehrere Flammschutzmittel, Stabilisatoren wie Oxidationsschutzmittel, Lichtschutzmittel und/oder Hydrophobierungs- oder Oleophobierungsmittel.

Geeignete Flammschutzmittel sind zum Beispiel anorganische Flammschutzmittel, halogenierte organische Verbindungen, organische Phosphorverbindungen oder halogenierte organische Phosphorverbindungen.

Geeignete anorganische Flammschutzmittel sind zum Beispiel Phosphate wie Ammoniumphosphate, Aluminiumhydroxide, Aluminiumoxidhydrate, Zinkborate, Antimonoxid.

Geeignete halogenierte organische Verbindungen sind zum Beispiel Chlorparaffine, polychlorierte Biphenyle, Hexabrombenzol, polybromierte Diphenylether (PBDE) und andere Brom-Verbindungen, Additionsprodukte des Hexachlorcyclopentadiens, z. B. mit Cyclooctadien, Tetrabrombisphenol A , Tetrabromphthalsäureanhydrid, Dibromneopentylglycol.

Geeignete organische Phosphorverbindungen sind zum Beispiel organische Phosphate, Phosphite und Phosphonate, wie zum Beispiel Trikresylphosphat und *tert-* Butylphenyldiphenylphosphat.

Geeignete halogenierte organische Phosphorverbindungen sind zum Beispiel Tris(2,3-dibrompropyl)phosphat, Tris(2-brom-4-methylphenyl)phosphat und Tris(2-chlorisopropyl) phosphat.

Bevorzugte Flammschutzmittel sind zum Beispiel Polyvinylchloride oder Polyvinylidenchloride wie Copolymere aus Vinylidenchlorid mit (Meth)Acrylsäureestern. Derartige Produkte werden zum Beispiel unter dem Handelsnamen Diofan^{®} vertrieben.

Geeignete Lichtschutzmittel sind zum Beispiel Radikalfänger wie sterisch gehinderte organische Amine (HALS), Peroxidzersetzer wie zum Beispiel Benzotriazole wie 2-(2-Hydroxyphenyl)-2H-benzotriazole (BTZ) oder Hydroxybenzophenone (BP). Weitere geeignete Lichtschutzmittel sind zum Beispiel (2-Hydroxyphenyl)-s-triazine (HPT), Oxalanilide oder nicht-pigmentäres Titandioxid. Geeignete Lichtschutzmittel sind zum Beispiel unter dem Handelsnamen Irganox^{®}, Irgastab^{®} oder Tinuvin^{®} erhältlich. Bevorzugte Lichtschutzmittel sind HALS Verbindungen.

Als **Polyurethanschicht (C)** geeignet sind thermoplastische Polyurethane. Geeignete Polyurethane sind alle thermoplastischen Polyurethane, die sich in Form bevorzugt wässriger Dispersionen bereitstellen lassen. Bevorzugt haben sie eine Glastemperatur kleiner als 0°C, bestimmt beispielsweise durch DSC (Differentialthermoanalyse, Differential Scanning Calorimetry) nach DIN 53765. Bevorzugt besteht Polymerschicht (C) im Wesentlichen aus Polyurethan.

Polyurethane (PU) sind allgemein bekannt, kommerziell erhältlich und bestehen im Allgemeinen aus einer Weichphase aus höhermolekularen Polyhydroxylverbindungen, z.B. aus Polycarbonat, Polyester- oder Polyethersegmenten, und einer Urethan-Hartphase, gebildet aus niedermolekularen Kettenverlängerungsmitteln und Di- oder Polyisocyanaten.

Verfahren zur Herstellung von Polyurethanen (PU) sind allgemein bekannt. Im Allgemeinen werden Polyurethane (PU) durch Umsetzung von
(i) Isocyanaten, bevorzugt Diisocyanaten mit
(ii) gegenüber Isocyanaten reaktiven Verbindungen, üblicherweise mit einem Molekulargewicht (M_{w}) von 500 bis 10.000 g/mol, bevorzugt 500 bis 5.000 g/mol, besonders bevorzugt 800 bis 3.000 g/mol, und
(iii) Kettenverlängerungsmitteln mit einem Molekulargewicht von 50 bis 499 g/mol, gegebenenfalls in Gegenwart von
(iv) Katalysatoren
(v) und/oder üblichen Zusatzstoffen hergestellt.

Im Folgenden sollen beispielhaft die Ausgangskomponenten und Verfahren zur Herstellung der bevorzugten Polyurethane (PU) dargelegt werden. Die bei der Herstellung der Polyurethane (PU) üblicherweise verwendeten Komponenten (i), (ii), (iii) sowie gegebenenfalls (iv) und/oder (v) sollen im Folgenden beispielhaft beschrieben werden:
Als Isocyanate (i) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methylpentamethylen-diisocyanat-1,5, 2-Ethyl-butylen-diisocyanat-1,4, Pentamethylendiisocyanat-1,5, Butylen-diisocyanat-1,4,1-lsocyanato-3,3,5-trimethyl-5-isocyanatomethyl-cyclohexan (Isophorondiisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-di-isocyanat und/oder 4,4' -, 2,4' - und/oder 2,2' - Dicyclohexylmethan-diisocyanat, 2,2 '-, 2,4 '- und/oder 4,4 '-Diphenylmethandiisocyanat (MDI), 1,5-Naph-thylendiisocyanat (NDI), 2,4- und/oder 2,6-Toluylendiisocyanat (TDI), 3,3 '-Dimethyl-diphenyl-diisocyanat, 1,2-Diphenylethandiisocyanat und/oder Phenylendiisocyanat. Bevorzugt wird 4,4' -MDI verwendet. Bevorzugt sind zudem aliphatische Diisocyanate, insbesondere Hexamethylendiisocyanat (HDI), und besonders bevorzugt sind aromatische Diisocyanate wie 2,2 '-, 2,4 '- und/oder 4,4 '-Di-phenylmethandiisocyanat (MDI) und Mischungen der vorstehend genannten Isomere.

Als gegenüber Isocyanaten reaktive Verbindungen (ii) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten (M_{w}) im Bereich von 500 bis 8.000 g/mol, bevorzugt 600 bis 6.000 g/mol, insbesondere 800 bis 3.000 g/mol, und bevorzugt einer mittleren Funktionalität gegenüber Isocyanaten von 1,8 bis 2,3, bevorzugt 1,9 bis 2,2, insbesondere 2. Bevorzugt setzt man Polyether-polyole ein, beispielsweise solche auf der Basis von allgemein bekannten Startersubstanzen und üblichen Alkylenoxiden, beispielsweise Ethylenoxid, 1,2-Pro-pylenoxid und/oder 1,2-Butylenoxid, bevorzugt Polyetherole basierend auf Polyoxytetramethylen (Poly-THF), 1,2-Propylenoxid und Ethylenoxid. Polyetherole weisen den Vorteil auf, dass sie eine höhere Hydrolysestabilität als Polyesterole besitzen, und sind bevorzugt als Komponente (ii), insbesondere zur Herstellung von weichen Polyurethanen (PU1).

Als Polycarbonatdiole sind insbesondere aliphatische Polycarbonatdiole zu nennen, beispielsweise 1,4-Butandiol-Polycarbonat und 1,6-Hexandiol-Polycarbonat.

Als Polyesterdiole sind solche zu nennen, die sich durch Polykondensation von mindestens einem primären Diol, vorzugsweise mindestens einen primären aliphatischen Diol, beispielsweise Ethylenglykol, 1,4-Butandiol, 1,6-Hexandiol, Neopentylglykol oder besonders bevorzugt 1,4-Dihydroxymethylcyclohexan (als Isomerengemisch) oder Mischungen von mindestens zwei der vorstehend genannten Diole einerseits und mindestens einer, bevorzugt mindestens zwei Dicarbonsäuren oder ihren Anhydriden andererseits herstellen lassen. Bevorzugte Dicarbonsäuren sind aliphatische Dicarbonsäuren wie Adipinsäure, Glutarsäure, Bernsteinsäure und aromatische Dicarbonsäuren wie beispielsweise Phthalsäure und insbesondere Isophthalsäure.

Polyetherole werden bevorzugt durch Anlagerung von Alkylenoxiden, insbesondere Ethylenoxid, Propylenoxid und Mischungen daraus, an Diole wie beispielsweise Ethylenglykol, 1,2-Propylenglykol, 1,2-Butylenglykol, 1,4-Butandiol, 1,3-Propandiol, oder an Triole wie beispielsweise Glycerin, in Gegenwart von hochaktiven Katalysatoren hergestellt. Derartige hochaktive Katalysatoren sind beispielsweise Cäsiumhydroxid und Dimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetherol belassen werden; vorzugsweise wird er entfernt, beispielsweise durch Sedimentation oder Filtration.

Statt eines Polyols können auch Mischungen verschiedener Polyole eingesetzt werden.

Zur Verbesserung der Dispergierbarkeit kann man als gegenüber Isocyanaten reaktive Verbindungen (ii) anteilig auch ein oder mehr Diole oder Diamine mit einer Carbonsäuregruppe oder Sulfonsäuregruppe (b' ) einsetzen, insbesondere Alkalimetall- oder Ammoniumsalze von 1,1-Dimethylolbutansäure, 1,1-Dimethylolpropionsäure oder

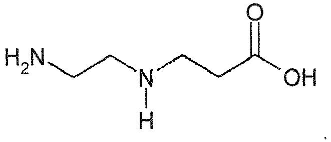

Als Kettenverlängerungsmittel (iii) werden an sich bekannte aliphatische, araliphatische, aromatische und/oder cycloaliphatische Verbindungen mit einem Molekulargewicht von 50 bis 499 g/mol und mindestens zwei funktionellen Gruppen, bevorzugt Verbindungen mit genau zwei funktionellen Gruppen pro Molekül, eingesetzt, beispielsweise Diamine und/oder Alkandiole mit 2 bis 10 C-Atomen im Alkylenrest, insbesondere 1,3-Propandiol, Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen pro Molekül, bevorzugt entsprechende Oligo- und/oder Polypropylenglykole, wobei auch Mischungen an Kettenverlängerungsmitteln (iii) eingesetzt werden können.

Besonders bevorzugt handelt es sich bei den Komponenten (i) bis (iii) um difunktionelle Verbindungen, d.h. Diisocyanate (i), difunktionelle Polyole, bevorzugt Polyetherole (ii) und difunktionelle Kettenverlängerungsmittel, bevorzugt Diole.

Geeignete Katalysatoren (iv), welche insbesondere die Reaktion zwischen den NCO-Gruppen der Diisocyanate (i) und den Hydroxylgruppen der Komponenten (ii) und (iii) beschleunigen, sind an sich bekannte tertiäre Amine, wie z.B. Triethylamin, Dimethyl-cyclohexylamin, N-Methylmorpholin, N,N' -Dimethylpiperazin, 2-(Dimethylamin-oethoxy)-ethanol, Diazabicyclo-[2,2,2]-octan ("DABCO ") und ähnliche tertiäre Amine, sowie insbesondere organische Metallverbindungen wie Titansäureester, Eisenverbindungen wie z. B. Eisen-(III)- acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Komponente (ii) eingesetzt.

Neben Katalysatoren (iv) können den Komponenten (i) bis (iii) auch Hilfsmittel und/oder Zusatzstoffe (v) hinzugefügt werden. Genannt seien beispielsweise Treibmittel, Antiblockmittel, oberflächenaktive Substanzen, Füllstoffe, beispielsweise Füllstoffe auf Basis von Nanopartikeln, insbesondere Füllstoffe auf Basis von CaCO₃, weiterhin Keimbildungsmittel, Gleithilfemittel, Farbstoffe und Pigmente, Antioxidantien, z.B. gegen Hydrolyse, Licht, Hitze oder Verfärbung, anorganische und/oder organische Füllstoffe, Verstärkungsmittel und Weichmacher, Metalldeaktivatoren. In einer bevorzugten Ausführungsform fallen unter die Komponente (v) auch Hydrolyse-schutzmittel wie beispielsweise polymere und niedermolekulare Carbodiimide. Bevorzugt enthält das weiche Polyurethan Triazol und/oder Triazolderivate und Antioxidantien in einer Menge von 0,1 bis 5 Gew.-% bezogen auf das Gesamtgewicht des betreffenden weichen Polyurethans. Als Antioxidantien sind im allgemeinen Stoffe geeignet, welche unerwünschte oxidative Prozesse im zu schützenden Kunststoff hemmen oder verhindern. Im Allgemeinen sind Antioxidantien kommerziell erhältlich. Beispiele für Antioxidantien sind sterisch gehinderte Phenole, aromatische Amine, Thiosynergisten, Organophosphorverbindungen des trivalenten Phosphors, und Hindered Amine Light Stabilizers. Beispiele für sterisch gehinderte Phenole finden sich in Plastics Additive Handbook, 5th edition, H. Zweifel, ed, Hanser Publishers, München, 2001 ([1]), S. 98-107 und S. 116 - S. 121. Beispiele für aromatische Amine finden sich in [1] S. 107-108. Beispiele für Thiosynergisten sind gegeben in [1], S.104-105 und S.112-113. Beispiele für Phosphite finden sich in [1], S.109-112.Beispiele für Hindered Amine Light Stabilizer sind gegeben in [1], S.123-136. Zur Verwendung im Antioxidantiengemisch eignen sich bevorzugt phenolische Antioxidantien. In einer bevorzugten Ausführungsform weisen die Antioxidantien, insbesondere die phenolischen Antioxidantien, eine Molmasse von größer 350 g/mol, besonders bevorzugt von größer 700g/mol und einer maximalen Molmasse (M_{w}) bis maximal 10.000 g/mol, bevorzugt bis maximal 3.000 g/mol auf. Ferner besitzen sie bevorzugt einen Schmelzpunkt von maximal 180°C. Weiterhin werden bevorzugt Antioxidantien verwendet, die amorph oder flüssig sind. Ebenfalls können als Komponente (v) auch Gemische von zwei oder mehr Antioxidantien verwendet werden.

Neben den genannten Komponenten (i), (ii) und (iii) und gegebenenfalls (iv) und (v) können auch Kettenregler (Kettenabbruchsmittel), üblicherweise mit einem Molekulargewicht von 31 bis 3000 g/mol, eingesetzt werden. Solche Kettenregler sind Verbindungen, die lediglich eine gegenüber Isocyanaten reaktive funktionelle Gruppe aufweisen, wie z.B. monofunktionelle Alkohole, monofunktionelle Amine und/oder monofunktionelle Polyole. Durch solche Kettenregler kann ein Fließverhalten, insbesondere bei weichen Polyurethanen, gezielt eingestellt werden. Kettenregler können im Allgemeinen in einer Menge von 0 bis 5, bevorzugt 0,1 bis 1 Gew.-Teile, bezogen auf 100 Gew.-Teile der Komponente (ii) eingesetzt werden und fallen definitionsgemäß unter die Komponente (iii).

Neben den genannten Komponenten (i), (ii) und (iii) und gegebenenfalls (iv) und (v) können auch Vernetzungsmittel mit zwei oder mehr gegenüber Isocyanat reaktiven Gruppen gegen Schluss der Aufbaureaktion eingesetzt werden, beispielsweise Hydrazinhydrat.

Zur Einstellung der Härte von Polyurethan (PU) können die Komponenten (ii) und (iii) in relativ breiten molaren Verhältnissen gewählt werden. Bewährt haben sich molare Verhältnisse von Komponente (ii) zu insgesamt einzusetzenden Kettenverlängerungsmitteln (iii) von 10 : 1 bis 1 : 10, insbesondere von 1 : 1 bis 1 : 4, wobei die Härte der weichen Polyurethane mit zunehmendem Gehalt an (iii) ansteigt. Die Umsetzung zur Herstellung von Polyurethan (PU) kann bei einer Kennzahl von 0,8 bis 1,4 : 1, bevorzugt bei einer Kennzahl von 0,9 bis 1,2 : 1, besonders bevorzugt bei einer Kennzahl von 1,05 bis 1,2 : 1 erfolgen. Die Kennzahl ist definiert durch das Verhältnis der insgesamt bei der Umsetzung eingesetzten Isocyanatgruppen der Komponente (i) zu den gegenüber Isocyanaten reaktiven Gruppen, d.h. den aktiven Wasserstoffen, der Komponenten (ii) und gegebenenfalls (iii) und gegebenenfalls monofunktionellen gegenüber Isocyanaten reaktiven Komponenten als Kettenabbruchsmitteln wie z.B. Monoalkoholen.

Die Herstellung von Polyurethan (PU) kann nach an sich bekannten Verfahren kontinuierlich, beispielsweise nach One-shot oder dem Prepolymerverfahren, oder diskontinuierlich nach dem an sich bekannten Prepolymerprozess erfolgen. Bei diesen Verfahren können die zur Reaktion kommenden Komponenten (i), (ii), (iii) und gegebenenfalls (iv) und/oder (v) nacheinander oder gleichzeitig miteinander vermischt werden, wobei die Reaktion unmittelbar einsetzt.

Polyurethan (PU) kann man nach an sich bekannten Verfahren in Wasser dispergieren, beispielsweise indem man Polyurethan (PU) in Aceton löst oder als Lösung in Aceton herstellt, mit Wasser versetzt und danach das Aceton entfernt, beispielsweise durch Abdestillieren. In einer Variante stellt man Polyurethan (PU) als Lösung in N-Methyl-pyrrolidon oder N-Ethylpyrrolidon her, versetzt mit Wasser und entfernt das N-Methyl-pyrrolidon bzw. N-Ethylpyrrolidon.

In einer Ausführungsform der vorliegenden Erfindung enthalten erfindungsgemäße wässrige Dispersionen zwei verschiedene Polyurethane, Polyurethan (PU1) und Polyurethan (PU2), von denen Polyurethan (PU1) ein so genanntes weiches Polyurethan ist, das wie oben als Polyurethan (PU) beschrieben aufgebaut ist, und mindestens ein hartes Polyurethan (PU2).

Hartes Polyurethan (PU2) kann man im Grundsatz analog zu weichem Polyurethan (PU1) herstellen; jedoch wählt man andere gegenüber Isocyanaten reaktiven Verbindungen (ii) oder andere Mischungen von gegenüber Isocyanaten reaktiven Verbindungen (ii), im Rahmen der vorliegenden Erfindung auch als gegenüber Isocyanaten reaktiven Verbindungen (ii-2) oder kurz Verbindungen (ii-2) bezeichnet.

Beispiele für Verbindungen (ii-2) sind insbesondere 1,4-Butandiol, 1,6-Hexandiol und Neopentylglykol, entweder in Mischung miteinander oder in Mischung mit Polyethylen-glykol.

In einer Variante der vorliegenden Erfindung wählt man als Diisocyanat (i) für Polyure-than (PU2) jeweils Mischungen von Diisocyanaten, beispielsweise Mischungen von HDI und IPDI, wobei man zur Herstellung von hartem Polyurethan (PU2) größere Anteile an IPDI wählt als zur Herstellung von weichem Polyurethan (PU1).

In einer Ausführungsform der vorliegenden Erfindung weist Polyurethan (PU2) einen Shore-Härte A im Bereich von über 60 bis maximal 100 auf, wobei die Shore-Härte A nach DIN 53505 nach 3 s bestimmt wurde.

In einer Ausführungsform der vorliegenden Erfindung weist Polyurethan (PU) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist weiches Polyurethan (PU1) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist Polyurethan (PU2) einen mittleren Partikeldurchmesser im Bereich von 100 bis 300 nm, bevorzugt 120 bis 150 nm auf, bestimmt durch Laserlichtstreuung.

Bevorzugt handelt es sich bei Polymerschicht (C) um eine Polyurethanschicht, eine PVC-Schicht, eine Schicht aus einem Epoxidharz, eine Polyacrylatschicht oder eine Polybutadienschicht, besonders bevorzugt um eine Polyurethanschicht. Besonders bevorzugt handelt es sich bei Polymerschicht (C) um eine Polyurethanschicht.

In einer Ausführungsform der vorliegenden Erfindung weist Polymerschicht (C) eine mittlere Dicke im Bereich von 15 bis 300 µm, bevorzugt von 20 bis 150 µm, besonders bevorzugt von 25 bis 80 µm auf.

In einer Ausführungsform der vorliegenden Erfindung weist Polymerschicht (C) im Mittel mindestens 100, bevorzugt mindestens 250, besonders bevorzugt mindestens 1000 Kapillaren pro 100 cm² auf.

In einer Ausführungsform der vorliegenden Erfindung weisen die Kapillaren einen mittleren Durchmesser im Bereich von 0,005 bis 0,05 mm, bevorzugt 0,009 bis 0,03 mm auf.

In einer Ausführungsform der vorliegenden Erfindung sind die Kapillaren gleichmäßig über Polymerschicht (C) verteilt. In einer bevorzugten Ausführungsform der vorliegenden Erfindung sind die Kapillaren jedoch ungleichmäßig über die Polymerschicht (C) verteilt.

In einer Ausführungsform der vorliegenden Erfindung sind die Kapillaren im Wesentlichen gebogen. In einer anderen Ausführungsform der vorliegenden Erfindung weisen die Kapillaren einen im Wesentlichen gradlinigen Verlauf auf.

Die Kapillaren verleihen der Polymerschicht (C) eine Luft- und Wasserdampfdurchlässigkeit, ohne dass eine Perforierung erforderlich wäre. In einer Ausführungsform der vorliegenden Erfindung kann die Wasserdampfdurchlässigkeit der Polymerschicht (C) über 1,5 mg/cm²·h liegen, gemessen nach DIN 53333. So ist es möglich, dass beispielsweise Wirkstoff enthaltende Flüssigkeiten durch die Polymerschicht (C) hindurch migrieren können.

In einer Ausführungsform der vorliegenden Erfindung weist Polymerschicht (C) zusätzlich zu den Kapillaren noch Poren auf, die nicht über die gesamte Dicke der Polymerschicht (C) gehen.

In einer Ausführungsform weist Polymerschicht (C), insbesondere Polyurethanschicht (C) eine Musterung auf. Die Musterung kann beliebig sein und beispielsweise die Musterung eines Leders oder einer Holzoberfläche wiedergeben. In einer Ausführungsform der vorliegenden Erfindung kann die Musterung ein Nubukleder wiedergeben.

In einer Ausführungsform der vorliegenden Erfindung weist Polymerschicht (C), insbesondere Polyurethanschicht (C) eine samtartige Erscheinung auf.

In einer Ausführungsform der vorliegenden Erfindung kann die Musterung einer Samtoberfläche entsprechen, beispielsweise mit Härchen mit einer mittleren Länge von 20 bis 500 µm, bevorzugt 30 bis 200 µm und besonders bevorzugt 60 bis 100 µm. Die Härchen können beispielsweise einen kreisförmigen Durchmesser aufweisen. In einer besonderen Ausführungsform der vorliegenden Erfindung haben die Härchen eine kegelförmige Form.

In einer Ausführungsform der vorliegenden Erfindung weist Polymerschicht (C), insbesondere Polyurethanschicht (C) Härchen auf, die in einem mittleren Abstand von 50 bis 350, bevorzugt 100 bis 250 µm zueinander angeordnet sind.

Für den Fall, dass die Polymerschicht (C), insbesondere Polyurethanschicht (C) Härchen aufweist, beziehen sich die Angaben über die mittlere Dicke auf die Polymerschicht (C), insbesondere Polyurethanschicht (C), ohne die Härchen.

In anderen Ausführungsformen weist Polymerschicht (C), insbesondere Polyurethanschicht (C) Schriftzüge, Logos, oder Bilder auf. In einer Ausführungsform weist Polymerschicht (C), insbesondere Polyurethanschicht (C) komplizierte Bilder auf, wie sie in WO 2012/072740 beschrieben sind.

In einer bevorzugten Ausführungsform wird Polymerschicht (C), insbesondere Polyurethanschicht (C) aus einer wässrigen Polymerdispersion, bevorzugt Polyurethandispersion gebildet, die mindestens einen Vernetzer V enthält, wobei der mindestens eine Vernetzer V mindestens ein Polyisocyanat P ist, das mit mindestens einem Blockierungsmittel BM blockiert ist.

In einer besonders bevorzugten Ausführungsform der Erfindung enthalten wässrige Polymer-/Polyurethandispersionen zur Herstellung von Verbindungsschichten (B) und /oder Polymerschicht (C), insbesondere Polyurethanschicht (C) 0,1 bis 5 Gew% von Dipropylenglycoldimethylether und/oder 1,2-Propandiol-diacetat.

In einer besonders bevorzugten Ausführungsform werden den wässrigen Polymer/Polyurethandispersionen geeignete Vernetzer V als 1 bis 80 Gew%ige Lösung in Dipropylenglycoldimethylether und/oder 1,2-Propandiol-diacetat zugegeben, bevorzugt als 30 bis 75 Gew%ige Lösung in Dipropylenglycoldimethylether und/oder 1,2-Propan-diol-diacetat.

In einer besonders bevorzugten Ausführungsform werden den wässrigen Polymer/Polyurethandispersionen Polyisocyanat-Vernetzer V als 30 bis 75 Gew%ige Lösung in Dipropylenglycoldimethylether und/oder 1,2-Propandiol-diacetat zugegeben.

Meist enthält Schicht (C) mindestens einen mit Blockierungsmittel BM blockiertes Polyisocyanat P. Geeignete Polyisocyanate P und Blockierungsmittel BM sind weiter oben beschrieben. Die in den Schichten (C) enthaltenen mit Blockierungsmittel BM blockierten Polyisocyanate P können gleich oder unterschiedlich sein.

Das erfindungsgemäße **Verfahren** wird üblicherweise so ausgeführt, dass man
a) mit Hilfe einer Matrize die Polyurethanschicht (C) bildet,
b) das Klebstoffpolymer in fester Form auf die Folie (A) und/oder auf Polyurethanschicht (C) aufbringt, und
c) die Polyurethanschicht (C) mit der Folie (A) verbindet.

**Schritt (a)** kann man wie folgt durchführen.

Vorzugsweise handelt es sich bei der **Matrize** um eine Silikonmatrize. Unter Silikonmatrizen werden im Rahmen der vorliegenden Erfindung solche Matrizen verstanden, zu deren Herstellung mindestens ein Bindemittel eingesetzt wird, das mindestens eine, bevorzugt mindestens drei O-Si(R¹R²)-O-Gruppen pro Molekül aufweist. Dabei sind R¹ und - so vorhanden - R² verschieden oder vorzugsweise gleich und gewählt aus organischen Gruppen und bevorzugt C₁-C₆-Alkyl, insbesondere Methyl.

In einer Ausführungsform der vorliegenden Erfindung handelt es sich bei der Silikonmatrize um eine mit Hilfe von Lasergravur strukturierte Silikonmatrize.

In einer anderen Ausführungsform handelt es sich bei der Matrize um eine Matrize aus Ethylen-Propylen-Kautschuk (EPM) oder Ethylen-Propylen-Dien-Kautschuk (EPDM).

In einer Ausführungsform der vorliegenden Erfindung handelt es sich bei der Matrize aus EPM oder EPDM um eine mit Hilfe von Lasergravur strukturierte Matrize.

Man bringt eine wässrige Polymer-Dispersion (also beispielsweise das Polyurethan) auf eine Matrize auf, die vorgewärmt ist und lässt das Wasser verdunsten.

Das Aufbringen von wässriger Polymer-Dispersion auf die Matrize kann nach an sich bekannten Methoden erfolgen, insbesondere durch Aufsprühen, beispielsweise mit einer Sprühpistole.

Die Matrize weist Musterung, auch Strukturierung genannt, auf, die man beispielsweise durch Lasergravur erzeugt oder durch Abformen.

Wünscht man die Matrize mit Hilfe von Lasergravur zu strukturieren, so ist es bevorzugt, die lasergravierbare Schicht vor der Lasergravur durch Erwärmen (thermochemisch), durch Bestrahlen mit UV-Licht (photochemisch) oder durch Bestrahlen mit energiereicher Strahlung (aktinisch) oder einer beliebigen Kombination davon zu verstärken.

Anschließend wird die lasergravierbare Schicht oder der Schichtverbund auf einen zylindrischen (temporären) Träger, beispielsweise aus Kunststoff, glasfaserverstärktem Kunststoff, Metall oder Schaum, beispielsweise mittels Klebeband, Unterdruck, Klemmvorrichtungen oder Magnetkraft, aufgebracht und wie oben beschrieben graviert. Alternativ kann auch die plane Schicht bzw. der Schichtverbund wie oben beschrieben graviert werden. Optional wird während des Lasergravurvorgangs die lasergravierbare Schicht mit einem Rundwascher oder einem Durchlaufwascher mit einem Reinigungsmittel zur Entfernung von Gravurrückständen gewaschen.

Auf die beschriebene Weise kann die Matrize als Negativmatrize oder als Positivmatrize hergestellt werden.

In einer ersten Variante weist die Matrize eine Negativ-Struktur auf, so dass die mit Folie (A) verbindbare Beschichtung direkt durch Auftragen eines flüssigen Kunststoffmaterials auf die Oberfläche der Matrize und anschließender Verfestigung des Polymers erhalten werden kann.

In einer zweiten Variante weist die Matrize eine Positiv-Struktur auf, so dass zunächst eine Negativ-Matrize durch Abformung von der laserstrukturierten Positivmatrize hergestellt wird. Von dieser Negativ-Matrize kann die mit einem flächigen Träger verbindbare Beschichtung anschließend durch Auftragen eines flüssigen Kunststoffmaterials auf die Oberfläche der Negativmatrize und anschließender Verfestigung des Kunststoffmaterials erhalten werden.

Vorzugsweise werden in die Matrize Strukturelemente mit Abmessungen im Bereich von 10 bis 500 □m eingraviert. Die Strukturelemente können als Erhebungen oder Vertiefungen ausgebildet sein. Vorzugsweise haben die Strukturelemente eine einfache geometrische Form und sind beispielsweise Kreise, Ellipsen, Quadraten, Rauten, Dreiecken und Sterne. Die Strukturelemente können ein regelmäßiges oder unregelmäßiges Raster bilden. Beispiele sind ein klassisches Punktraster oder ein stochastisches Raster, beispielsweise ein frequenzmoduliertes Raster.

In einer Ausführungsform der vorliegenden Erfindung arbeitet man zur Strukturierung der Matrize mit Hilfe eines Lasers Näpfchen in die Matrize ein, die eine mittlere Tiefe im Bereich von 50 bis 250 µm aufweisen und einen Mittenabstand im Bereich von 50 bis 250 µm.

Beispielsweise kann man die Matrize so gravieren, dass sie "Näpfchen " (Vertiefungen) aufweist, welche einen Durchmesser im Bereich von 10 bis 500 µm an der Oberfläche der Matrize aufweisen. Vorzugsweise beträgt der Durchmesser an der Oberfläche der Matrize 20 bis 250 µm und besonders bevorzugt 30 bis 150 µm. Der Abstand der Näpfchen kann beispielsweise 10 bis 500 µm, vorzugsweise 20 bis 200 µm, besonders bevorzugt bis 80 µm betragen.

In einer Ausführungsform der vorliegenden Erfindung weist die Matrize vorzugsweise neben einer Oberflächen-Grobstruktur noch eine Oberflächen-Feinstruktur auf. Sowohl Grob- als auch Feinstruktur können durch Lasergravur erzeugt werden. Die Fein-struktur kann beispielsweise eine Mikrorauigkeit mit einer Rauhigkeitsamplitude im Bereich von 1 bis 30 µm und einer Rauhigkeitsfrequenz von 0,5 bis 30 µm sein. Bevorzugt liegen die Dimensionen der Mikrorauigkeit im Bereich von 1 bis 20 µm, besonders bevorzugt 2 bis 15 µm und besonders bevorzugt 3 bis 10 µm.

Zur Lasergravur eigenen sich insbesondere IR-Laser. Es können aber auch Laser mit kürzeren Wellenlängen eingesetzt werden, vorausgesetzt der Laser weist eine ausreichende Intensität auf. Beispielsweise kann ein frequenzverdoppelter (532 nm) oder frequenzverdreifachter (355 nm) Nd-YAG-Laser eingesetzt werden, oder auch ein Excimer-Laser (z.B. 248 nm). Zur Lasergravur kann beispielsweise ein CO₂-Laser mit einer Wellenlänge von 10640 nm eingesetzt werden. Besonders bevorzugt werden Laser mit einer Wellenlänge von 600 bis 2000 nm eingesetzt. Beispielsweise können Nd-YAG-Laser (1064 nm), IR-Diodenlaser oder Festkörperlaser eingesetzt werden. Besonders bevorzugt sind Nd/YAG-Laser. Die einzugravierende Bildinformation wird direkt aus dem Lay-Out-Computersystem zur Laserapparatur übertragen. Die Laser können entweder kontinuierlich oder gepulst betrieben werden.

Im Regelfall kann die erhaltene Matrize nach der Herstellung direkt eingesetzt werden. Falls gewünscht, kann die erhaltene Matrize noch nachgereinigt werden. Durch einen solchen Reinigungsschritt werden losgelöste, aber eventuell noch nicht vollständig von der Oberfläche entfernte Schichtbestandteile entfernt. Im Regelfalle ist einfaches Behandeln mit Wasser, Wasser/Tensid, Alkoholen oder inerten organischen Reinigungsmitteln ausreichend, die vorzugsweise quellungsarm sind.

In einem weiteren Schritt bringt man eine wässrige Formulierung von Polymer auf die Matrize auf. Das Aufbringen kann vorzugsweise durch Aufsprühen erfolgen. Die Matrize sollte erwärmt sein, wenn man die Formulierung von Polymer aufbringt, beispielsweise auf Temperaturen von mindestens 80°C, bevorzugt mindestens 90°C. Das Wasser aus der wässrigen Formulierung von Polymer verdampft und bildet die Kapillaren in der sich verfestigenden Polymerschicht.

Unter wässrig wird im Zusammenhang mit der Polymerdispersion verstanden, dass sie Wasser enthält, aber weniger als 5 Gew.-%, bezogen auf die Dispersion, bevorzugt weniger als 1 Gew.-% organisches Lösungsmittel. Besonders bevorzugt lässt sich kein flüchtiges organisches Lösungsmittel nachweisen. Unter flüchtigen organischen Lösungsmitteln werden im Rahmen der vorliegenden Erfindung solche organischen Lösungsmittel verstanden, die bei Normaldruck einen Siedepunkt von bis zu 200°C aufweisen.

In einer Ausführungsform der vorliegenden Erfindung enthält wässrige Polymer-dispersion mindestens einen Zusatz, gewählt aus Pigmenten, Mattierungsmitteln, Lichtschutzmitteln, Flammschutzmitteln, Antioxidantien, Antistatika, Antisoil, Antiknarz, Verdickungsmitteln, insbesondere Verdickungsmitteln auf Basis von Polyurethanen, Hydrophobierungsmitteln, Oleophobierungsmitteln und Mikrohohlkugeln. In einer Ausführungsform der vorliegenden Erfindung enthält wässrige Polymerdispersion insgesamt bis zu 20 Gew.-% an Zusätzen.

Wässrige Polymerdispersion kann außerdem ein oder mehrere organische Lösemittel enthalten. Geeignete organische Lösemittel sind beispielsweise Alkohole wie Ethanol oder Isopropanol und insbesondere Glykole, Diglykole, Triglykole oder Tetraglykole und zweifach oder vorzugsweise einfach mit C₁-C₄-Alkyl veretherte Glykole, Diglykole, Triglykole oder Tetraglykole. Beispiele für geeignete organische Lösemittel sind Ethylenglykol, Propylenglykol, Butylenglykol, Diethylenglykol, Triethylenglykol, Tetraethylenglykol, Dipropylenglykol, 1,2-Dimethoxyethan, Methyltriethylenglykol ("Methyltriglykol ") und Triethylenglykol-n-butylether ("Butyltriglykol ").

In einer Ausführungsform der Erfindung enthalten wässrige Polymere, insbesondere Polyurethandispersionen kein Propylencarbonat.

In einer bevorzugten Ausführungsform wird Polyurethanschicht (C) aus einer wässrigen Polyurethandispersion gebildet, die optional mindestens einen Vernetzer V enthält, wobei der mindestens eine Vernetzer V mindestens ein Polyisocyanat P ist, das optional mit mindestens einem Blockierungsmittel BM blockiert ist, wie sie oben definiert sind.

In einer Ausführungsform der Erfindung enthalten wässrige Polyurethandispersionen zur Herstellung von Polymerschicht (C) 0,1 bis 5 Gew% von Dipropylenglycoldimethylether und/oder 1,2-Propandiol-diacetat. In einer besonders bevorzugten Ausführungsform werden den wässrigen Polyurethandispersionen zur Herstellung der mindestens einer Polymerschicht (C) geeignete Vernetzer V als 1 bis 80 Gew%ige Lösung in Dipropylen-glycoldimethylether und/oder 1,2-Propandiol-diacetat zugegeben, bevorzugt als 30 bis 75 Gew%ige Lösung in Dipropylenglycoldimethylether und/oder 1,2-Propandiol-diacetat. In einer besonders bevorzugten Ausführungsform werden den wässrigen Polyurethandispersionen zur Herstellung der mindestens einer Polymerschicht (C) Polyisocyanat-Vernetzer V als 30 bis 75 Gew%ige Lösung in Dipropylenglycol-dimethylether und/oder 1,2-Propandiol-diacetat zugegeben.

Nach dem Aushärten der Polyurethanschicht (C) trennt man sie von der Matrize, beispielsweise durch Abziehen, und erhält einen Polymerfilm, der in erfindungsgemäßem mehrschichtigem Verbundsystem die Polymerschicht (C) bildet. In einer bevorzugten Ausführungsform der vorliegenden Erfindung kann man die Matrize auch als Schutzschicht dienen lassen und erst nach der Herstellung des eigentlichen mehrschichtigen Verbundsystems entfernen.

In **Schritt (b)** bringt man das Klebstoffpolymer in fester Form auf die Folie (A) und/oder auf Polyurethanschicht (C) auf.

Das Aufbringen des Klebstoffpolymers in fester Form (wie des Klebegitters, Klebevlies oder Klebefolie) kann nach an sich bekannten Methoden erfolgen, insbesondere durch das Auflegen oder aufpressen. Das Aufbringen kann kontinuierlich oder diskontinuierlich erfolgen. Das Klebstoffpolymers in fester Form kann als aufgerollte Ware bereitgestellt werden.

In einer anderen Form bringt man das Klebstoffpolymer in fester Form auf die Polyurethanschicht (C) auf.

In einer anderen Form bringt man das Klebstoffpolymer in fester Form auf die Folie (A) und auf die Polyurethanschicht (C) auf.

In einer bevorzugten Form bringt man das Klebstoffpolymer in fester Form auf die Folie (A) auf.

In **Schritt (c)** verbindet man die Polyurethanschicht (C) mit der Folie (A).

Üblicherweise verbindet man die Polyurethanschicht (C) mit der Folie (A) so, dass die Schicht(en) von Klebstoffpolymer zwischen Polyurethanschicht (C) und Folie (A) zu liegen kommen.

Man härtet das Klebstoffpolymer meist aus, beispielsweise thermisch, durch aktinische Strahlung oder durch Alterung, und erhält erfindungsgemäßes mehrschichtiges Verbundmaterial. Die Aushärtung erfolgt bevorzugt thermisch.

Möglich ist auch das Verbundsystems zu komprimieren, beispielsweise mit Hilfe eines Kalanders. Geeignete Anpressdrücke können im Bereich von 1 bis 20 bar, bevorzugt 1,5 bis 10 bar und insbesondere 2 bis 5 bar liegen. Geeignete Anpressdauern können im Bereich von 10 Sekunden bis 100 min, bevorzugt 30 Sekunden bis 30 min, und insbesondere 1 bis 10 min, liegen. Geeignete Anpresstemperaturen können im Bereich von 80 bis 160°C, bevorzugt 90 bis 150 °C und insbesondere 100 bis 140 °C liegen.

Die mehrschichtigen Verbundmaterialien, die nach dem erfindungsgemäßen Verfahren hergestellt worden sind, weisen verschiedene **Vorteile** auf:
Sie haben angenehme optische und haptische Eigenschaften auf und zeigen überraschend gute mechanische Eigenschaften wie Reibechtheiten, Knickechtheiten.

Zudem weisen Sie gute Gebrauchseigenschaften auf und lassen sich gut reinigen, zum Beispiel durch mechanische Reinigung oder chemische Reinigung, zum Beispiel mit überkritischen Kohlendioxid oder organischen Lösungsmitteln wie Kohlenwasserstoffen oder halogenierten Kohlenwasserstoffen. Insbesondere weisen sie überlegenen Lagerungs- und Alterungseigenschaften, insbesondere Heißlichtalterungs-eigenschaften, Hydrolyseeigenschaften auf. Weiterhin weisen Verbundmaterialien, die nach dem erfindungsgemäßen Verfahren hergestellt worden sind, eine sehr konstante Qualität auf, da die verwendeten wässrigen Polymerdispersionen über lange Zeit lagerstabil sind. Außerdem zeigte sich, dass Kompositmaterialien, die nach dem erfindungsgemäßen Verfahren hergestellt worden sind, nach der Herstellung sofort klebfrei waren und nach der Herstellung sehr schnell gestapelt, aufgerollt oder anderweitig gelagert werden konnten.

### Beispiele

- TPU Folie 1:: farblose, transparente Folie aus thermoplastischen Polyurethan basierend auf aromatischen Polyester-Polyurethan, Dichte 1,21 g/cm3 (DIN53479), Schmelzbereich 140-155 °C (Kofler bank bei 50 µm Dicke), Shore-A-Härte von Rohstoff ca. 86 (DIN53505), Reißfestigkeit längs/quer 45 MPa, Reißdehnung längs/quer 490% (DIN EN ISO 527-1, -3), kommerziell erhältlich als "Thermoplastische Polyurethanfolie 4119 " von Gerlinger Industries, Nordlingen, Deutschland.
- TPU Folie 2:: farblose, opake Folie aus thermoplastischen Polyurethan basierend auf aromatischen Polyester-Polyurethan, Dichte 1,19 g/cm³ (DIN 53479), Schmelzbereich 165-175 °C (Kofler bank bei 50 µm Dicke), Shore-A-Härte von Rohstoff ca. 86 (DIN 53505), Reißfestigkeit längs/quer 40 MPa, Reißdehnung längs/quer 500% (DIN EN ISO 527-1, -3), kommerziell erhältlich als "Thermo-plastische Polyurethanfolie 4120 " von Gerlinger Industries, Nordlingen, Deutschland.
- TPU Folie 3:: Folie aus thermoplastischen Polyurethan, Dicke 150 µm, Schmelztemperatur ca. 120 °C, kommerziell erhältlich.
- Polyamid Folie 1:: farblose Polyamidfolie aus Caprolactam, Hexamethylendiamin und Adipinsäure (Copolyamid 6/66), Schmelzpunkt etwa 190 °C.
- Kleber A:: Weisses Vlies aus einem Copolyester, Flächengewicht 8-60 g/m², Schmelzbereich von 87-97 °C, **Schmelze-Volumenfließrate MVR** von 51 bis 100 cm³/10 min, kommerziell erhältlich von Protechnic S.A., Cernay, Frankreich.
- Kleber B:: Weisses Vlies aus einem Copolyamid, Flächengewicht 8-60 g/m², Schmelzbereich von 98-108 °C, **Schmelze-Volumenfließrate MVR** von 19 bis 50 cm³/10 min, kommerziell erhältlich von Protechnic S.A., Cernay, Frankreich.
- Kleber C:: Weisses Vlies aus einem aliphatischen thermoplastischen Polyurethanpolyester, Flächengewicht 12-70 g/m², Schmelzbereich von 105-115 °C, **Schmelze-Volumenfließrate MVR** von 51 bis 100 cm³/10 min, kommerziell erhältlich von Protechnic S.A., Cernay, Frankreich.

Der Schmelzbereich wurde mittels DSC nach IS011357 bestimmt. Die **Schmelze-Volumenfließrate MVR wurde** gemessen bei 160 °C und 2,16 kg nach ISO 1133-1.
- valure^{®} PToM:: wässrige, anionische Polyurethandispersion, 31-38 wt% Festgehalt, pH 6-8.5, Auslaufzeit 10-20 s (DIN53211, 4 mm bei 20 °C).
- Pigment:: wässrige, schwarze Pigmentzubereitung, kommerziell erhältlich von BASF SE als Luconyl^{®} NG Schwarz 0066.
- valure^{®} Härter CI:: 50-70 wt% Lösung von polyfunktionelles, oligomeres Isocyanat auf Basis von Hexamethylen-1,6-diisocyanat, kommerziell erhältlich von BASF SE.

### Allgemeines Herstellverfahren

### Schritt (a)

Eine Silikonmatrize mit einem gewünschten Muster wurde nach dem Stand der Technik hergestellt.

Auf der Matrize wurde eine Polyurethanschicht gebildet durch Besprühen der heißen Matrize mit der wässrigen Polyurethandispersion enthaltend valure^{®} PToM, valure^{®} Härter CI, und Pigment gemäß Stand der Technik.

### Schritt (b)

Die Kleber A, B oder C wurde auf die Größe der Folie zugeschnitten und von Hand auf die Folie aufgelegt.

### Schritt (c)

Die Polyurethanschicht wurde von der Matrize abgezogen und mit der Folie auf welcher der Kleber liegt verbunden, so dass der Kleber zwischen Polyurethanschicht und Folie liegt.

Das so erhaltene Verbundmaterial wurde bei 130-135 °C für 3 bzw. 5 Minuten bei einem Druck von 3 mPa gepresst.

### Beispiele 1 - 9 - Verbundmaterial auf TPU Folien

Mehrschichtiges Verbundmaterial auf Basis von TPU Folie (TPU Folie 1, TPU Folie 2, und TPU Folie 3) wurde nach dem allgemeinen Herstellverfahren produziert.

Die Haftung der Schichten in dem Verbundmaterial wurde händisch geprüft und qualitativ bewertet Die Ergebnisse sind in Tabelle 1 zusammengefasst.

**Tabelle 1**

| Beispiel | Folie | Kleber | Haftung bei 3 min Pressung | Haftung bei 5 min Pressung |
|---|---|---|---|---|
| 1 | TPU Folie 1 | A | Sehr gut | Sehr gut |
| 2 | TPU Folie 1 | B | Sehr gut | Sehr gut |
| 3 | TPU Folie 1 | C | Sehr gut | Sehr gut |
| 4 | TPU Folie 2 | A | Sehr gut | Sehr gut |
| 5 | TPU Folie 2 | B | Sehr gut | Sehr gut |
| 6 | TPU Folie 2 | C | Sehr gut | Sehr gut |
| 7 | TPU Folie 3 | A | Sehr gut | Sehr gut |
| 8 | TPU Folie 3 | B | Sehr gut | Sehr gut |
| 9 | TPU Folie 3 | C | Sehr gut | Sehr gut |

| | | | | |
|---|---|---|---|---|
| Beispiel 10 - Verbundmaterial auf Polyamid Folie | | | | |

Mehrschichtiges Verbundmaterial auf Basis der Polyurethan-Folie 1 und Kleber A wurde nach dem allgemeinen Herstellverfahren produziert und die Haftung wie in Beispiele 1-9 geprüft. Die Haftung war sehr gut.

## Patentansprüche

1. Ein Verfahren zur Herstellung von mehrschichtigen Verbundmaterialien enthaltend
(A) eine Folie aus Polyurethan oder Polyamid,
(B) eine Verbindungsschicht aus thermoplastischen Klebstoffpolymer mit einem Schmelzbereich bestimmt mittels DSC nach IS011357 von 70 bis 130 °C, und
(C) eine Polyurethanschicht,
wobei man
a) mit Hilfe einer Matrize die Polyurethanschicht (C) bildet,
b) das Klebstoffpolymer in fester Form auf die Folie (A) und/oder auf Polyurethanschicht (C) aufbringt, und
c) die Polyurethanschicht (C) mit der Folie (A) verbindet.

2. Das Verfahren nach Anspruch 1, wobei die Folie aus thermoplastischem Polyurethan oder aus aliphatischem Polyamid ist.

3. Das Verfahren nach Anspruch 1 oder 2, wobei die Folie aus thermoplastischem Polyurethan ist.

4. Das Verfahren nach einem der Ansprüche 1 bis 3, wobei die Folie eine Dicke von 1 bis 500 µm hat.

5. Das Verfahren nach einem der Ansprüche 1 bis 4, wobei das Klebstoffpolymer in Schritt b) ein Flächengewicht von 5 bis 100 g/m² hat.

6. Das Verfahren nach einem der Ansprüche 1 bis 5, wobei das Klebstoffpolymer in Schritt b) eine Schmelze-Volumenfließrate MVR gemessen bei 160 °C und 2,16 kg nach ISO 1133-1 von 10 bis 100 cm³/10 min hat.

7. Das Verfahren nach einem der Ansprüche 1 bis 6, wobei man in Schritt b) den Klebstoff in Form eines Klebegitters, Klebevlies oder Klebefolie aufbringt.

8. Das Verfahren nach einem der Ansprüche 1 bis 7, wobei das Klebstoffpolymer einen Schmelzbereich bestimmt mittels DSC nach IS011357 von 80 bis 125 °C hat.

9. Das Verfahren nach einem der Ansprüche 1 bis 8, wobei das Klebstoffpolymer auf Polyurethanen, Polyamiden, Polyestern, oder Polyolefinen basiert.

10. Das Verfahren nach einem der Ansprüche 1 bis 9, **dadurch gekennzeichnet, dass** die Polyurethanschicht (C) eine Musterung aufweist.

11. Das Verfahren nach einem der Ansprüche 1 bis 10, wobei die Verbindungsschicht (B) eine durchbrochene Schicht eines gehärteten Klebstoffpolymers ist.

12. Das Verfahren nach einem der Ansprüche 1 bis 11, **dadurch gekennzeichnet, dass** es sich bei der Matrize um eine mit Hilfe von Lasergravur strukturierte Silikonmatrize handelt.

13. Das Verfahren nach einem der Ansprüche 1 bis 12, **dadurch gekennzeichnet, dass** man zur Strukturierung der Matrize mit Hilfe eines Lasers Näpfchen in die Matrize einarbeitet, die eine mittlere Tiefe im Bereich von 50 bis 250 µm aufweisen und einen Mittenabstand im Bereich von 50 bis 250 µm.

14. Ein mehrschichtiges Verbundmaterial enthaltend
(A) eine Folie aus Polyurethan oder Polyamid,
(B) eine Verbindungsschicht aus thermoplastischen Klebstoffpolymer mit einem Schmelzbereich von 70 bis 130 °C, und
(C) eine Polyurethanschicht,
erhältlich durch ein Verfahren gemäß den Ansprüchen 1 bis 13.

## Claims

1. A process for the preparation of multilayered composite materials comprising:
(A) a film made of polyurethane or polyamide,
(B) a tie layer made of thermoplastic adhesive polymer with a melting range, determined by means of DSC according to ISO11357, from 70°C to 130°C, and
(C) a polyurethane layer,
wherein
a) the polyurethane layer (C) is formed using a mold,
b) the adhesive polymer is applied in solid form to the film (A) and/or to polyurethane layer (C), and
c) the polyurethane layer (C) is combined with the film (A).

2. The process according to claim 1, wherein the film is made of thermoplastic polyurethane or of aliphatic polyamide.

3. The process according to claim 1 or 2, wherein the film is made of thermoplastic polyurethane.

4. The process according to any of claims 1 to 3, wherein the film has a thickness of 1 to 500 µm.

5. The process according to any of claims 1 to 4, wherein the adhesive polymer in stage b) has a weight per unit area of 5 to 100 g/m².

6. The process according to any of claims 1 to 5, wherein the adhesive polymer in stage b) has a melt volume-flow rate MVR of 10 to 100 cm³/10 min.

7. The process according to any of claims 1 to 6, wherein, in stage b), the adhesive is applied in the form of an adhesive grid, adhesive web or adhesive film.

8. The process according to any of claims 1 to 7, wherein the adhesive polymer has a melting range of 80°C to 125°C.

9. The process according to any of claims 1 to 8, wherein the adhesive polymer is based on polyurethanes, polyamides, polyesters or polyolefins.

10. The process according to any of claims 1 to 9, wherein the polyurethane layer (C) exhibits a pattern.

11. The process according to any of claims 1 to 10, wherein the tie layer (B) is a perforated layer of a cured adhesive polymer.

12. The process according to any of claims 1 to 11, wherein the silicone mold is a silicone mold structured using laser engraving.

13. The process according to any of claims 1 to 12, wherein wells are incorporated in the mold in the structuring of the mold using a laser, which wells exhibit an average depth in the range from 50 to 250 µm and a center-to-center separation in the range from 50 to 250 µm.

14. A multilayered composite material comprising
(A) a film made of polyurethane or polyamide,
(B) a tie layer made of thermoplastic adhesive polymer with a melting range from 70°C to 130°C, and
(C) a polyurethane layer,
which can be obtained by a process according to claims 1 to 13.

## Revendications

1. Procédé pour la préparation de matériaux composites multicouches contenant
(A) une feuille de polyuréthane ou de polyamide,
(B) une couche de liaison composée de polymère adhésif thermoplastique doté d'une plage de fusion, déterminée au moyen de DSC selon la norme ISO 11357, de 70 à 130 °C, et
(C) une couche de polyuréthane,
dans lequel
a) on forme la couche de polyuréthane (C) à l'aide d'une matrice,
b) on applique le polymère adhésif sous forme solide sur la feuille (A) et/ou sur la couche de polyuréthane (C), et
c) on relie la couche de polyuréthane (C) avec la feuille (A).

2. Procédé selon la revendication 1, la feuille étant composée de polyuréthane thermoplastique ou de polyamide aliphatique.

3. Procédé selon la revendication 1 ou 2, la feuille étant composée de polyuréthane thermoplastique.

4. Procédé selon l'une quelconque des revendications 1 à 3, la feuille possédant une épaisseur de 1 à 500 µm.

5. Procédé selon l'une quelconque des revendications 1 à 4, le polymère adhésif dans l'étape b) possédant un poids surfacique de 5 à 100 g/m².

6. Procédé selon l'une quelconque des revendications 1 à 5, le polymère adhésif dans l'étape b) possédant un indice de fluidité à chaud en volume, mesuré à 160 °C et 2,16 kg selon la norme ISO 1133-1, de 10 à 100 cm³/10 min.

7. Procédé selon l'une quelconque des revendications 1 à 6, dans lequel on applique l'adhésif dans l'étape b) sous forme d'une grille adhésive, d'un feutre adhésif ou d'une feuille adhésive.

8. Procédé selon l'une quelconque des revendications 1 à 7, le polymère adhésif possédant une plage de fusion, déterminée au moyen de DSC selon la norme ISO 11357, de 80 à 125 °C.

9. Procédé selon l'une quelconque des revendications 1 à 8, le polymère adhésif étant à base de polyuréthanes, de polyamides, de polyesters ou de polyoléfines.

10. Procédé selon l'une quelconque des revendications 1 à 9, **caractérisé en ce que** la couche de polyuréthane (C) présente un motif.

11. Procédé selon l'une quelconque des revendications 1 à 10, la couche de liaison (B) étant une couche perforée d'un polymère adhésif durci.

12. Procédé selon l'une quelconque des revendications 1 à 11, **caractérisé en ce que** la matrice est une matrice de silicone structurée à l'aide d'une gravure laser.

13. Procédé selon l'une quelconque des revendications 1 à 12, **caractérisé en ce que** pour la structuration de la matrice, on incorpore des alvéoles dans la matrice à l'aide d'un laser, qui présentent une profondeur moyenne dans la plage de 50 à 250 µm et une distance entre les centres dans la plage de 50 à 250 µm.

14. Matériau composite multicouche contenant
(A) une feuille de polyuréthane ou de polyamide,
(B) une couche de liaison composée de polymère adhésif thermoplastique doté d'une plage de fusion de 70 à 130 °C, et
(C) une couche de polyuréthane,
qui peut être obtenu par un procédé selon les revendications 1 à 13.
